# FASCICULE DE BREVET EUROPEEN

(11) **EP 3 912 739 B1**
(45) Date de publication et mention de la délivrance du brevet: **27.11.2024**
(21) Numéro de dépôt: 21174612.8
(22) Date de dépôt: 19.05.2021
(51) Int. Cl.: B09B 3/00, B29B 17/02, B29B 17/00, C08J 11/04

(54) **PROCÉDÉ DE RECYCLAGE DE MÉGOTS DE CIGARETTES**
VERFAHREN ZUM RECYCELN VON ZIGARETTENSTUMMELN
PROCESS FOR RECYCLING CIGARETTE BUTTS

(30) Priorité: 19.05.2020 FR 2005076
(43) Date de publication de la demande: 24.11.2021
(73) Titulaire: Keenat, 33140 Villenave-d'Ornon (FR)
(72) Inventeur: FOURNIER, Teddy, 64160 MAUCOR (FR)
(74) Mandataire: Aquinov

(56) Documents cités:
- CN-A- 110 090 848
- DE-A1- 19 902 368
- DE-B4- 19 902 368
- DE-C1- 4 420 902
- DE-T2- 69 301 892
- IT-A1- MI20 100 481
- KR-A- 20160 005 297
- US-A- 5 482 216
- US-A1- 2014 018 502
- US-A1- 2014 287 144

## Description

### Domaine de l'invention

L'invention se rapporte au domaine du recyclage des mégots de cigarette. Ainsi, l'invention propose un nouveau procédé de recyclage desdits mégots.

### Etat de la technique

En plus d'occasionner des problèmes de santé publique majeure dans le monde, la cigarette et ses déchets, en particulier les mégots de cigarette occasionnent également des problématiques de pollution à l'échelle planétaire. Les mégots de cigarette sont bien connus pour contenir des restes de tabac non consumés, du papier, des filtres comprenant de l'acétate de cellulose et surtout de nombreux constituants toxiques. Or, les mégots comprenant lesdits constituants toxiques sont considérés comme de simples déchets que l'on retrouve malheureusement dans la nature et les océans, engendrant de fortes pollutions. En effet, un seul mégot de cigarette peut polluer jusqu'à 500 litres d'eau. Des études ont montré que les mégots de cigarette constituent la principale source de pollution des océans et ce avant les déchets plastiques.

Non seulement, les mégots de cigarette sont polluants, mais leur élimination ou leur recyclage est difficile en raison essentiellement, des nombreuses substances chimiques présentes.

C'est ainsi que des solutions ont vu le jour afin que les mégots de cigarette ne soient plus considérés comme des simples déchets mais comme d'une nouvelle matière première. Ainsi, la demande de brevet US2009113789 décrit un procédé de recyclage des mégots de cigarette comprenant les étapes suivantes : séparation de la fraction comprenant le papier et tabac de la fraction comprenant les filtres, broyage des filtres, ajout d'un solvant et essences minérales, mise en forme et séchage. Le solvant étant préférentiellement l'acétone. Il est également connu un procédé similaire comprenant en outre l'utilisation d'enzymes fongiques (MX2017008258L).

De façon alternative, il a également été décrit dans la demande de brevet FR3066128 un procédé similaire comprenant une étape de dépollution à l'eau. Une autre méthode de recyclage des mégots de cigarettes est décrite dans le document US2014/287144A1.

Toutefois, l'ensemble de ces solutions n'est pas entièrement satisfaisant du fait de la présence soit de solvant, soit d'eau pour dépolluer les mégots de cigarettes, en particulier l'acétate de cellulose. Or, il est nécessaire d'éliminer les substances chimiques de l'acétate afin de pouvoir être réutilisé dans d'autres processus de fabrication. Néanmoins, de tels procédés nécessitent des étapes supplémentaires de recyclage des solvants ou de l'eau afin de ne pas engendrer de pollution supplémentaire. Lesdits procédés sont de plus, coûteux.

### Résumé de l'invention

La présente invention propose ainsi de surmonter ces inconvénients et de répondre aux problématiques de l'art antérieur en proposant un procédé permettant de recycler les mégots de cigarette en éliminant certaines substances chimiques présentes.

Pour y répondre, l'invention propose ainsi un procédé de recyclage des mégots de cigarette, chaque mégot de cigarette comprenant au moins du tabac, du papier et un filtre, ledit filtre comprenant de l'acétate de cellulose et du papier.

De manière surprenante, les inventeurs ont observé l'élimination de la plupart des substances chimiques par chauffage des filtres. Ils ont notamment sélectionné une gamme de température particulière, comprise entre 80 et 100°C pour obtenir la dépollution des filtres de mégots de cigarette, suivie d'une seconde étape de chauffage d'au moins 170°C.

Ainsi, les filtres dépollués peuvent être réutilisés pour fabriquer des matériaux composites comprenant des filtres de mégots recyclés et au moins un polymère thermoplastique.

De tels matériaux sont ensuite destinés à être utilisés comme matériaux non alimentaires, préférentiellement pour la fabrication de mobilier, tuyau, pieds, cendrier, support de communication, panneaux. A titre d'exemple, le mobilier peut être du mobilier intérieur ou extérieur, tel que du mobilier destiné à un usage lié à la détente.

Ledit matériau peut également être utilisé dans d'autres domaines. Ainsi, il peut être utilisé dans des articles de sport tel que des vêtements sportifs ou du matériel de sport ou des équipements sportifs. Il peut également être utilisé dans des pièces techniques telles que des pièces mécaniques. A titre d'exemple, les pièces peuvent être des pièces automobiles.

Les inventeurs ont également observé le maintien ou l'amélioration des performances mécaniques telles que la rigidité, la résistance, la déformation à la rupture, la tenue au choc et la dureté lorsque le matériau composite incorpore les filtres de mégots recyclés, en particulier l'acétate de cellulose.

L'invention a ainsi pour objet un procédé de recyclage des mégots de cigarette, chaque mégot de cigarette comprenant au moins du tabac, du papier et un filtre, ledit filtre comprenant de l'acétate de cellulose et du papier, caractérisé en ce que le procédé comprend les étapes suivantes :
a) séparer dans une première fraction F1 les filtres et dans une deuxième fraction F2 le tabac et le papier issu d'un mélange comprenant le tabac, le papier et les filtres séparés les uns des autres, puis récupérer la première fraction F1,
b) sécher et dépolluer ladite fraction F1 contenant les filtres à une température comprise en 80 et 100°C,
c) broyer la fraction F1 contenant les filtres séchés et dépollués issu de l'étape b)
d) mélanger et dépolluer simultanément dans une extrudeuse les filtres broyés obtenus à l'étape c) avec au moins un polymère thermoplastique pour obtenir un matériau composite.

La méthode de l'invention permet d'obtenir un matériau composite comprenant entre 10 et 30% de filtres de mégots recyclés et entre 70 et 90% d'au moins un polymère thermoplastique. Le matériau composite est préférentiellement sous forme de granulé.

Le matériau obtenu par la méthode de l'invention peut être utilisé comme matériau non alimentaire, préférentiellement pour la fabrication de mobilier, tuyau, pieds, cendrier, support de communication, panneaux, matériaux divers...

L'invention est à présent décrite en détail. D'autres caractéristiques et avantages ressortiront de la description détaillée de l'invention et des exemples qui vont suivre.

### Description détaillée de l'invention

### Définitions

Par « diffus » on entend au sens de l'invention, des déchets ne comprenant pas les mégots de cigarette et issus majoritairement des cendriers susceptibles de contenir un ou plusieurs produits chimiques pouvant présenter un risque important pour la santé et/ou l'environnement. On y trouve également papiers divers, bâton de sucette, tickets de transport en commun, plastiques divers...

Par « mégot de cigarette » on entend au sens de l'invention, le déchet ou reste d'une cigarette après son usage. Il s'agit donc d'un déchet toxique, difficile à collecter et à valoriser bien que l'acétate de cellulose soit recyclable. Un mégot de cigarette comprend notamment du papier, du tabac, des cendres et un filtre comprenant de l'acétate de cellulose constituant la matière première du procédé selon l'invention.

« Par filtres recyclés » ou « filtres de mégots recyclés », on entend au sens de l'invention, les filtres ayant subi les étapes a) à b) du procédé selon l'invention. A la fin de l'étape b), le procédé permet ainsi d'obtenir un nouveau matériau issu des filtres de mégot et ayant été séché et dépollué lors de l'étape b). Ledit matériau comprend essentiellement de l'acétate de cellulose. Préférentiellement, lesdits filtres recyclées subissent une nouvelle étape de broyage. Ainsi, à la fin de l'étape c) les filtres broyés et recyclés sont aptes à être mélangés avec un matériau thermoplastique pour former le matériau composite au sens de la présente invention.

Par « broyeur » on entend au sens de l'invention, un dispositif permettant d'effectuer un broyage, c'est-à-dire de réduire une matière à une dimension donnée et/ou de faciliter la séparation de différents constituants. Par exemple, séparer d'un mégot, ses différents constituants et/ou d'obtenir des fragments de mégots. Ainsi, il permet de rendre accessibles les différents constituants des mégots et ainsi, faciliter son recyclage.

Par « compoundage » on entend au sens de l'invention, un procédé d'extrusiongranulation permettant le mélange par fusion d'un polymère telle qu'un polymère thermoplastique avec un ou plusieurs additifs telles que l'acétate de cellulose recyclé, préférentiellement les filtres recyclés lors de l'étape b) ou les filtres recyclés lors de l'étape c), afin d'obtenir une matière plastique sous forme de compounds.

### Procédé selon l'invention

L'invention vise donc un procédé de recyclage des mégots de cigarette, chaque mégot de cigarette comprenant au moins du tabac, du papier et un filtre, ledit filtre comprenant de l'acétate de cellulose et du papier, caractérisé en ce que le procédé comprend les étapes suivantes :
a) séparer dans une première fraction F1 les filtres et dans une deuxième fraction F2 le tabac et le papier issu d'un mélange comprenant du tabac, du papier et des filtres, puis récupérer la première fraction F1,
b) sécher et dépolluer par chauffage la fraction F1 comprenant les filtres à une température comprise en 80 et 100°C,
c) broyer la fraction F1 comprenant les filtres séchés et dépollués issu de l'étape b),
d) mélanger et dépolluer simultanément par chauffage dans une extrudeuse les filtres broyés obtenus à l'étape c) avec au moins un polymère thermoplastique pour obtenir un matériau composite.

De façon particulièrement préférée, le procédé selon l'invention ne comprend aucun ajout de solvant ou d'eau, préférentiellement lors des étapes de dépollution.

Selon un mode de réalisation, le procédé peut comprendre une étape supplémentaire, avant l'étape a), d'extraction du tabac contenu dans les mégots de cigarettes. Ladite extraction est réalisée avec un broyeur. Préférentiellement, ce broyeur est un broyeur de type doseur mono-vis, doseur bi-vis sans fin ou broyeur à couteaux.

Selon un autre mode de réalisation de l'invention, le procédé peut comprendre une première étape d'extraction au moyen d'un premier broyeur et une deuxième étape de broyage lors de l'étape c) au moyen d'un deuxième broyeur, ledit premier broyeur est caractérisé en ce que le broyat ou les fragments obtenus sont plus gros que le broyat ou les fragments obtenus lors du second broyage lors de l'étape c). Le deuxième broyage permet ainsi, d'obtenir un broyat ou des fragments plus fins que lors de l'extraction du tabac au moyen d'un premier broyeur.

Selon un autre mode de réalisation, le procédé peut comprendre deux étapes supplémentaires avant l'étape a). Ainsi, le procédé peut comprendre les étapes préliminaires suivantes :
- trier pour récupérer uniquement les mégots de cigarette à partir d'un mélange de déchets diffus et de mégots de cigarettes, et
- extraire le tabac contenu dans les mégots de cigarette avec un broyeur.

Le tri permet de séparer les différentes fractions contenues dans les cendriers, soit une fraction contenant le diffus et une fraction contenant les mégots de cigarette. Le tri peut être mis en oeuvre par criblage horizontal et/ou rotatif, préférentiellement un tamis vibrant et/ou un cribleur. Le cribleur rotatif peut-être un trommel automatisé. Par exemple, le tri peut être effectué à l'aide d'un Tamis Rotatif horticole de Type Ménart TH0924.

A la fin du tri, deux fractions différentes sont ainsi séparées, chacune comprenant soit les mégots de cigarette comprenant le tabac, le papier et le filtre, soit le diffus. La fraction comprenant le diffus sera ensuite transformée en combustibles de substitution solides (CSS), à haut pouvoir calorifique et valorisée à travers les filières de valorisation énergétique telles que les usines d'incinération alimentant ainsi les fours de cimenteries

La fraction d'intérêt comprenant les mégots poursuivra le processus afin d'en extraire le tabac et le papier contenu dans lesdits mégots de cigarette avec un premier broyeur.

Afin d'extraire le tabac et le papier, le broyeur utilisé est un broyeur apte à séparer le tabac des filtres sans broyer les filtres. Préférentiellement, le broyeur compresse les mégots pour en extraire le tabac. De façon particulièrement préférée, le premier broyeur peut être un broyeur de type doseur mono-vis, doseur bi-vis sans fin ou broyeur à couteaux.

A la fin de cette étape d'extraction, un mélange comprenant le tabac, le papier et les filtres séparés les uns des autres est obtenu.

A partir de ce mélange, le procédé selon l'invention met en oeuvre une étape a) de séparation des différents constituants du mélange. Cela permet d'obtenir dans une première fraction F1 les filtres et dans une deuxième fraction F2 le tabac et le papier issu du mélange obtenu lors de l'étape précédente, puis la première fraction F1 est récupérée.

La séparation en deux fractions lors de l'étape a) est effectuée avec un moyen de tri. Un tel moyen de tri peut être un tamis ou un cribleur rotatif, préférentiellement un trommel. De façon particulièrement préférée, le diamètre de la grille du tamis est compris entre 3 et 6mm.

Préférentiellement, l'étape a) est répétée de 3 à 5 fois sur la fraction F1 comprenant les filtres.

Le tabac et le papier contenu dans la deuxième fraction F2 seront alors transformés en combustibles de substitution solides (CSS), à haut pouvoir calorifique et valorisés à travers les filières de valorisation énergétique telles que les usines d'incinération.

La première fraction F1 comprenant les filtres est ensuite séchée et dépolluée par chauffage à une température comprise en 80 et 160°C lors de l'étape b), préférentiellement à une température de 90°C. Le chauffage permet à la fraction F1 d'être, d'une part séchée pour faciliter le broyage lors de l'étape suivante, et d'autre part de dépolluer partiellement les filtres, ce qui permet l'obtention des filtres recyclées. Les filtres obtenus à la fin de l'étape b) sont majoritairement sous forme de fibres.

Selon un mode de réalisation, le chauffage est suivi d'un passage dans une étuve sous vide qui permet d'éliminer des substances telles que le Fluoranthène, le Benzo(a)pyrène ou le Benzo(b)fluoranthène.

La durée de l'étape de séchage et de dépollution, préférentiellement par chauffage, lors de l'étape b) est comprise entre 3 et 12 heures.

Le séchage et la dépollution peuvent être effectués par tout moyen de chauffage adapté. Toutefois, selon un mode de réalisation préféré, le moyen de chauffage est une cuve à étuver.

De façon particulièrement préférée, ledit procédé comprend une étape supplémentaire de séchage entre l'étape b) et c). Cette étape de séchage supplémentaire est mise en oeuvre dans une étuve sous vide qui permet de maximiser la dépollution des filtres. A faible taux d'oxygène, la température de dégradation de la cellulose plus élevée associée à une pression faible favorise l'évaporation des polluants organiques.

La fraction F1 une fois séchée et dépolluée lors de l'étape b) est alors broyée de nouveau lors d'une étape c) avec un broyeur. L'étape c) permet ainsi, de broyer finement (entre 3 et 5mm) les filtres recyclés comprenant l'acétate de cellulose afin de faciliter l'étape d) d'incorporation d'au moins un thermoplastique et de dépollution.

Préférentiellement le broyeur utilisé à l'étape c) est un broyeur à couteaux à basse vitesse ou un broyeur à végétaux. Par exemple, le broyeur à végétaux peut-être un broyeur à végétaux de type ELIET MAJOR 4S ou de type Viking GE 250.1. Le broyage de l'étape c) est éventuellement suivi d'un passage en trommel ou tamis rotatif avec une grille 8 mm afin de conserver uniquement les filtres broyés contenant l'acétate de cellulose.

Préférentiellement, la durée du broyage à l'étape c) est comprise entre 20 et 40 minutes, plus préférentiellement 30 minutes.

Selon un mode de réalisation alternatif, le broyeur de l'étape c) peut être identique au broyeur de l'étape préliminaire d'extraction, préférentiellement il s'agit d'un broyeur à couteaux.

A la fin du broyage à l'étape c), on obtient ainsi des fragments de filtres recyclés d'un diamètre compris entre 3 et 5mm. Lesdits fragments obtenus sont ainsi un nouveau matériau apte à être mélangé avec au moins un polymère thermoplastique.

Préférentiellement l'étape c) vise à rendre, les fibres obtenues lors de l'étape b), dosable par l'extrudeuse utilisée lors de l'étape d).

Par « dosable » on entend au sens de l'invention une matière qui peut être introduite facilement dans une machine. C'est-à-dire que la machine absorbe la matière via une trémie d'entrée sans action (par exemple de bourrage) et ce en quantité précise et homogène.

A partir des fragments de filtres recyclés obtenus lors de l'étape c), le procédé comprend une étape d) de mélange et de dépollution simultanée dans une extrudeuse avec au moins un polymère thermoplastique pour obtenir un matériau composite.

Selon un mode de réalisation alternatif, l'étape c) de broyage est remplacée par une étape de densification des filtres obtenus à la fin de l'étape b). Cette étape de densification permet de densifier les filtres recyclés lors de l'étape b) afin de compacter les fibres d'acétate de cellulose présentes dans lesdits filtres recyclés.

Préférentiellement, le densificateur utilisé pour compacter les fibres, permet d'obtenir des filtres recyclés sous forme de pellet cylindrique de 5mm de long maximum pour un diamètre de 3mm avec une densité optimale permettant la bonne dispersion des filtres recyclés dans le matériau thermoplastique lors de l'étape d). Préférentiellement, la densité optimale obtenue est comprise entre 0,4 g/cm³ et 0,7 g/cm³, plus préférentiellement entre 0,5 g/cm³ et 0,6 g/cm³, encore plus préférentiellement 0.56g/cm³.

Préférentiellement, le mélange lors de l'étape d) est obtenu par compoundage.

Ainsi, l'étape d) est mise en oeuvre en chauffant le mélange dans une extrudeuse à une température d'au moins 170°C, de façon particulièrement préféré la température est comprise en 170 et 240°C.

Le matériau composite en fusion ressort alors de l'extrudeuse en joncs. Ces joncs sont ensuite refroidis et découpés pour obtenir des granulés.

Lors de l'étape d), en particulier lors du compoundage, la température d'au moins 170° C permet de dépolluer une seconde fois les filtres. Ainsi, des composés toxiques tels que le Fluoranthène, le Benzo(b)fluorenthène, le Benzo(b)pyrène sont évaporés et permettent d'optimiser/améliorer la dépollution des filtres.

Préférentiellement la durée de l'étape d) est relativement courte, d'au plus 5 minutes, préférentiellement de 1 à 2 minutes.

Selon un mode de réalisation préféré, des pressions faibles et/ou faible taux d'oxygène permettent de favoriser l'évaporation des composés toxiques

Selon un mode de réalisation préféré, le polymère thermoplastique est choisi parmi les polyamides et les poly(butylène). Préférentiellement, le polymère thermoplastique est choisi parmi le polyamide 6 (PA6), le polyamide 6.6 (PA66), le polyamide 11 (PA11), le polyamide 12 (PA12), le poly(butylène succinate) (PBS), le poly(butylène succinate adipate) (PBSA) et le polypropylène.

Les polyamides (PA) sont des polymères contenant des fonctions amide pouvant résulter de la polycondensation entre les fonctions acide carboxylique et amine et sont bien connus de l'homme de l'art.

Les poly(butylène) sont des polyoléfines ou des polymères saturés ayant la formule chimique (C4H8)n.

Les polypropylènes ou polypropylènes isotactique, de sigle PP (ou PPi) sont des polymères thermoplastiques semi-cristallin de grande consommation et de formule chimique (-CH2-CH(CH3)-)n. En particulier, le polypropylène isotactique est une polyoléfine résultant de la polymérisation coordinative des monomères propylène [(CH2=CH-CH3)] en présence de catalyseurs, suivant principalement la catalyse de Ziegler-Natta.

Préférentiellement, le mélange lors de l'étape d) comprend entre 10 à 30% de filtres recyclés et entre 70 à 90% d'au moins un polymère thermoplastique.

Selon un mode de réalisation de l'invention, le mélange lors de l'étape d) est réalisé avec au moins un polymère thermoplastique, des fragments de filtres recyclés d'un diamètre compris entre 3 à 5 mm et au moins un stabilisateur d'odeur.

Le stabilisateur d'odeur peut être tous composés ou molécules aptes à emprisonner les odeurs et diffuser une seconde odeur. Préférentiellement, ce peut être un désodorisant ou un absorbeur d'odeur.

A la fin de l'étape d), un matériau composite est obtenu. Préférentiellement, le matériau composite peut-être sous toute forme non filamenteuse ou non fibreuse, de façon particulièrement préférée sous forme de granulé ou de poudre.

Selon une variante, l'invention vise également un procédé de recyclage des mégots de cigarette, chaque mégot de cigarette comprenant au moins du tabac, du papier et un filtre, ledit filtre comprenant de l'acétate de cellulose, caractérisé en ce que le procédé comprend les étapes suivantes :
a) séparer dans une première fraction F1 les filtres et dans une deuxième fraction F2 le tabac et le papier issu d'un mélange comprenant du tabac, du papier et des filtres, puis récupérer la première fraction F1,
b) sécher et dépolluer par chauffage la fraction F1 contenant les filtres à une température comprise en 80 et 100°C,
c) mélanger la fraction F1 contenant les filtres séchés et dépollués issu de l'étape b) et dépolluer simultanément par chauffage dans une extrudeuse lesdits filtres obtenus à l'étape b) avec au moins un polymère thermoplastique pour obtenir un matériau composite.

Selon une autre variante, le matériau obtenu à la fin de l'étape b) peut être directement utilisé dans la conception d'un nouveau produit en utilisant un procédé de thermocompression. En particulier en utilisant une presse thermique, les fibres obtenues à la fin de l'étape b) peuvent être transformées en plaque par le procédé de thermocompression puis elles-mêmes usinées à façon pour créer des produits tels que par exemple des panneaux d'affichage ou des plaques de mobilier. En particulier, le matériau obtenu à la fin de l'étape b) est une fibre d'acétate de cellulose recyclée.

### Matériau composite selon l'invention

La méthode de l'invention permet d'obtenir un matériau composite comprenant entre 10 et 30% de filtres de mégots recyclés obtenu par la mise en oeuvre des étapes a) à d) du procédé selon l'invention et entre 70 et 90% d'au moins un polymère thermoplastique. Préférentiellement, le matériau composite est obtenu par la mise en oeuvre des étapes a) à d) du procédé selon l'invention, caractérisé en ce que le matériau composite comprend entre 70 et 90% d'au moins un polymère thermoplastique et entre 10 et 30% de fragments de filtres obtenus lors de l'étape c).

Ainsi, le matériau composite selon l'invention comprend entre 10 et 30% de filtre recyclés soit des filtres ayant subis une étape de séchage, dépollution et broyage ; et entre 70 et 90% d'au moins un polymère thermoplastique. Le mélange, préférentiellement le compoundage, des filtres recyclés et du polymère thermoplastique permet d'obtenir le matériau composition selon l'invention.

Préférentiellement, le polymère thermoplastique est choisi parmi les polyamides tels que le polyamide 6 (PA6), le polyamide 6.6 (PA66), le polyamide 11 (PA11), le polyamide 12 (PA12), le poly(butylène succinate) (PBS) le poly(butylène succinate adipate) (PBSA) et le polypropylène (PP).

Une fois le matériau composite obtenu, préférentiellement sous forme de granulé. Les granulés peuvent être utilisés en injection pour réaliser de nombreux objets, en particulier des plastiques à usage non alimentaire.

### Utilisations

Le matériau obtenu par la méthode de l'invention peut être utilisé comme matériau non alimentaire, préférentiellement pour la fabrication de mobilier, tuyau, pieds, cendrier, support de communication, panneaux.

A titre d'exemple, le mobilier peut être du mobilier intérieur ou extérieur, tel que du mobilier destiné à un usage lié à la détente.

Ledit matériau peut également être utilisé dans d'autres domaines. Ainsi, il peut être utilisé dans des articles de sport tel que des vêtements sportifs ou du matériel de sport ou des équipements sportifs. Il peut également être utilisé dans des pièces techniques telles que des pièces mécaniques. A titre d'exemple, les pièces peuvent être des pièces automobiles.

De façon particulièrement préféré, ces nouveaux matériaux non alimentaires sont recyclables après une étape de broyage suivi de l'étape d) du procédé selon l'invention.

L'invention est à présent illustrée par des exemples de composite et des résultats d'essais démontrant ses caractéristiques.

### Exemples

### Exemple 1 de composite selon l'invention

Matériau composite à base de résine polyamide 11 (PA11) comprenant 10% de filtres recyclés selon le procédé de l'invention avec les propriétés suivantes.

**[Tableau 1]**

| **Propriétés mécaniques** | **Valeur** | **Unité** | **Norme** |
|---|---|---|---|
| Module d'Young à 20°C (1mm/min) | 1580 | MPa | ISO 527-1/2 |
| Contrainte Maximum à 20°C (50mm/min) | 45 | MPa | ISO 527-1/2 |
| Déformation à rupture à 20°C (50mm/min) | 17 | % | ISO 527-1/2 |
| Choc Charpy entaillé à 20°C | 3 | Kj/m² | ISO 179/1eA |

| **Propriétés physiques** | **Valeur** | **Unité** | **Norme** |
|---|---|---|---|
| Densité à 20°C | 1,05 | g/cm³ | ISO 1183 |
| Dureté 20°C à 30s | 72 | Shore D | ISO 868 |
| Taux de cendre | 2 | % | ISO 3451/A |

### Exemple 2 de composite selon l'invention

Matériau composite à base de résine polyamide 11 (PA11) comprenant 30% de filtres recyclés selon le procédé de l'invention avec les propriétés suivantes.

**[Tableau 2]**

| **Propriétés mécanicues** | **Valeur** | **Unité** | **Norme** |
|---|---|---|---|
| Module d'Young à 20°C (1mm/min) | 2040 | MPa | ISO 527-1/2 |
| Contrainte Maximum à 20°C (50mm/min) | 48 | MPa | ISO 527-1/2 |
| Déformation à rupture à 20°C (50mm/min) | 6 | % | ISO 527-1/2 |
| Choc Charpy entaillé à 20°C | 2,9 | Kj/m² | ISO 179/1eA |

| **Propriétés physiques** | **Valeur** | **Unité** | **Norme** |
|---|---|---|---|
| Densité à 20°C | 1,13 | g/cm³ | ISO 1183 |
| Dureté 20°C à 30s | 75 | Shore D | ISO 868 |
| Taux de cendre | 5,7 | % | ISO 3451/A |

### Exemple 3 de composite selon l'invention

Matériau composite à base de résine polybutylène succinate (PBS) compostable comprenant 30% de filtres recyclés selon le procédé de l'invention avec les propriétés suivantes.

**[Tableau 3]**

| **Propriétés mécaniques** | **Valeur** | **Unité** | **Norme** |
|---|---|---|---|
| Module d'Young à 20°C (1mm/min) | 1590 | MPa | ISO 527-1/2 |
| Contrainte Maximum à 20°C (50mm/min) | 33 | MPa | ISO 527-1/2 |
| Déformation à rupture à 20°C (50mm/min) | 4 | % | ISO 527-1/2 |
| Choc Charpy entaillé à 20°C | 1,8 | Kj/m² | ISO 179/1eA |

| **Propriétés physiques** | **Valeur** | **Unité** | **Norme** |
|---|---|---|---|
| Densité à 20°C | 1,36 | g/cm³ | ISO 1183 |
| Dureté 20°C à 30s | 71 | Shore D | ISO 868 |
| Taux de cendre | 8,5 | % | ISO 3451/A |

### Exemple 4 de composite selon l'invention

Matériau composite à base de résine polybutylène succinate adipate (PBSA) compostable comprenant 30% de filtres recyclés selon le procédé de l'invention avec les propriétés suivantes.

**[Tableau 4]**

| **Propriétés mécanques** | **Valeur** | **Unité** | **Norme** |
|---|---|---|---|
| Module d'Young à 20°C (1mm/min) | 780 | MPa | ISO 527-1/2 |
| Contrainte Maximum à 20°C (50mm/min) | 16,5 | MPa | ISO 527-1/2 |
| Déformation à rupture à 20°C (50mm/min) | 18 | % | ISO 527-1/2 |
| Choc Charpy entaillé à 20°C | 3,8 | Kj/m² | ISO 179/1eA |

| **Propriétés physiques** | **Valeur** | **Unité** | **Norme** |
|---|---|---|---|
| Densité à 20°C | 1,31 | g/cm³ | ISO 1183 |
| Dureté 20°C à 30s | 59 | Shore D | ISO 868 |
| Taux de cendre | 7,0 | % | ISO 3451/A |

## Revendications

1. Procédé de recyclage des mégots de cigarette, chaque mégot de cigarette comprenant au moins du tabac, du papier et un filtre, ledit filtre comprenant de l'acétate de cellulose et du papier, le procédé comprenant les étapes suivantes :
a) séparer dans une première fraction F1 les filtres et dans une deuxième fraction F2 le tabac et le papier issu d'un mélange comprenant le tabac, le papier et les filtres séparés les uns des autres, puis récupérer la première fraction F1,
b) sécher et dépolluer par chauffage ladite fraction F1 contenant les filtres à une température comprise en 80 et 100°C,
c) broyer la fraction F1 contenant les filtres séchés et dépollués issu de l'étape b)
d) mélanger et dépolluer simultanément par chauffage dans une extrudeuse les filtres broyés obtenus à l'étape c) avec au moins un polymère thermoplastique pour obtenir un matériau composite.

2. Procédé selon la revendication 1, **caractérisé en ce qu'**il n'utilise pas de solvant et d'eau.

3. Procédé selon l'une des revendications précédentes, **caractérisé en ce que** ledit procédé comprend les étapes préliminaires suivantes :
- tri pour récupérer uniquement les mégots de cigarette à partir d'un mélange de déchets diffus et de mégots de cigarettes, et
- extraction du tabac contenu dans les mégots de cigarette avec un broyeur.

4. Procédé selon la revendication précédente, dans lequel le broyeur utilisé pour l'extraction du tabac contenu dans les mégots de cigarette est un doseur mono-vis ou un doseur bi-vis sans fin.

5. Procédé selon l'une des revendications précédentes, dans lequel la dépollution par chauffage lors de l'étape d) est effectuée à une température d'au moins 170°C.

6. Procédé selon l'une des revendications précédentes, **caractérisé en ce que** l'étape a) est répétée de 3 à 5 fois sur la fraction F1 comprenant les filtres.

7. Procédé selon l'une des revendications précédentes, **caractérisé en ce qu'**il comprend une étape supplémentaire entre l'étape c) et d) de séchage dans une étuve sous vide.

8. Procédé selon l'une des revendications précédentes, **caractérisé en ce que** l'étape c) est effectuée avec un broyeur à couteaux ou un broyeur à végétaux.

9. Procédé selon l'une des revendications précédentes, **caractérisé en ce que** la durée de l'étape de dépollution lors de l'étape b) est comprise entre 3 et 12 heures.

10. Procédé selon l'une des revendications précédentes, **caractérisé en ce que** la dépollution lors de l'étape b) est effectuée par chauffage dans une cuve à étuver.

11. Procédé selon l'une des revendications précédentes, **caractérisé en ce que** le mélange de l'étape d) comprend entre 10 à 30% de filtres recyclés et entre 70 à 90% d'au moins un polymère thermoplastique.

12. Procédé selon l'une des revendications précédentes, **caractérisé en ce que** le polymère thermoplastique de l'étape d) est choisi parmi le PA6, le PA11, le PA 12, le PBS, le PBSA et le PP.

## Patentansprüche

1. Verfahren zum Recyceln von Zigarettenstummeln, wobei jeder Zigarettenstummel mindestens Tabak, Papier und einen Filter umfasst, wobei der Filter Celluloseacetat und Papier umfasst, wobei das Verfahren folgende Schritte umfasst:
a) Separieren von Filtern in einer ersten Fraktion F1 und von Tabak und Papier in einer zweiten Fraktion F2, ausgehend von einem Gemisch, das Tabak, Papier und Filter getrennt voneinander umfasst, und anschließend Rückgewinnen der ersten Fraktion F1,
b) Trocknen und Dekontaminieren von Fraktion F1, die die Filter enthält, durch Erhitzen auf eine Temperatur zwischen 80 und 100 °C,
c) Mahlen von Fraktion F1, die die getrockneten und dekontaminierten Filter aus Schritt b) enthält,
d) gleichzeitiges Mischen und Dekontaminieren durch Erhitzen der in Schritt c) erhaltenen gemahlenen Filter in einem Extruder mit mindestens einem thermoplastischen Polymer, sodass ein Verbundwerkstoff erhalten wird.

2. Verfahren nach Anspruch 1, **dadurch gekennzeichnet, dass** kein Lösungsmittel und kein Wasser verwendet werden.

3. Verfahren nach einem der vorstehenden Ansprüche,
**dadurch gekennzeichnet, dass** das Verfahren folgende vorbereitende Schritte umfasst:
- Sortieren derart, dass aus einem Gemisch aus diffusem Abfall und Zigarettenstummeln nur die Zigarettenstummel zurückgewonnen werden, und
- Extrahieren des in den Zigarettenstummeln enthaltenen Tabaks mit einem Mahlwerk.

4. Verfahren nach vorstehendem Anspruch, wobei als Mahlwerk zum Extrahieren des in den Zigarettenstummeln enthaltenen Tabaks ein Einschneckendosierer oder ein Doppelschneckendosierer verwendet wird.

5. Verfahren nach einem der vorstehenden Ansprüche, wobei das Dekontaminieren durch Erhitzen während Schritt d) bei einer Temperatur von mindestens 170 °C erfolgt.

6. Verfahren nach einem der vorstehenden Ansprüche,
**dadurch gekennzeichnet, dass** bei Fraktion F1, die die Filter enthält, Schritt a) 3 bis 5 Mal wiederholt wird.

7. Verfahren nach einem der vorstehenden Ansprüche,
**dadurch gekennzeichnet, dass** es zwischen Schritt c) und d) einen zusätzlichen Schritt des Trocknens in einem Vakuumtrockenschrank umfasst.

8. Verfahren nach einem der vorstehenden Ansprüche,
**dadurch gekennzeichnet, dass** Schritt c) mit einem Messermahlwerk oder einem Pflanzenmahlwerk durchgeführt wird.

9. Verfahren nach einem der vorstehenden Ansprüche,
**dadurch gekennzeichnet, dass** die Dauer des Dekontaminierungsschritts während Schritt b) zwischen 3 und 12 Stunden beträgt.

10. Verfahren nach einem der vorstehenden Ansprüche,
**dadurch gekennzeichnet, dass** das Dekontaminieren in Schritt b) durch Erhitzen in einem Wärmetrockenschrank erfolgt.

11. Verfahren nach einem der vorstehenden Ansprüche,
**dadurch gekennzeichnet, dass** das Gemisch aus Schritt d) zu 10 bis 30 % recycelte Filter und zu 70 und 90 % mindestens ein thermoplastisches Polymer umfasst.

12. Verfahren nach einem der vorstehenden Ansprüche,
**dadurch gekennzeichnet, dass** das thermoplastische Polymer aus Schritt d) aus PA6, PA11, PA 12, PBS, PBSA und PP ausgewählt ist.

## Claims

1. A method for recycling cigarette butts, each cigarette butt comprising at least tobacco, paper and a filter, said filter comprising cellulose acetate and paper, the method comprising the following steps:
a) separating the filters into a first fraction F1 and the tobacco and paper from a mixture comprising tobacco, paper, and filters separated from each other into a second fraction F2, then recovering the first fraction F1,
b) drying and depolluting said fraction F1 containing the filters by heating to a temperature of between 80 and 100°C,
c) grinding the fraction F1 containing the dried and depolluted filters from step b)
d) simultaneously mixing and depolluting the ground filters obtained in step c) with at least one thermoplastic polymer by heating in an extruder to obtain a composite material.

2. The method according to claim 1, **characterized in that** it does not use solvent and water.

3. The method according to one of the preceding claims,
**characterized in that** said method comprises the following preliminary steps:
- sorting to recover only cigarette butts from a mixture of diffuse waste and cigarette butts, and
- extracting tobacco from cigarette butts using a grinder.

4. The method according to the preceding claim, wherein the grinder used to extract the tobacco contained in the cigarette butts is a single-screw or endless twin-screw doser.

5. The method according to one of the preceding claims, wherein the depollution by heating in step d) is carried out at a temperature of at least 170°C.

6. The method according to one of the preceding claims, **characterized in that** step a) is repeated 3 to 5 times on the fraction F1 comprising the filters.

7. The method according to one of the preceding claims, **characterized in that** it comprises an additional step between step c) and d) of drying in a vacuum oven.

8. The method according to one of the preceding claims,
**characterized in that** step c) is carried out with a knife mill or a plant shredder.

9. The method according to one of the preceding claims, **characterized in that** the duration of the depollution step in step b) is between 3 and 12 hours.

10. The method according to one of the preceding claims, **characterized in that** the depollution in step b) is carried out by heating in a steaming tank.

11. The method according to one of the preceding claims,
**characterized in that** the mixture of step d) comprises between 10 and 30% recycled filters and between 70 and 90% at least one thermoplastic polymer.

12. The method according to one of the preceding claims,
**characterized in that** the thermoplastic polymer of step d) is chosen from PA6, PA11, PA 12, PBS, PBSA and PP.
